# EUROPEAN PATENT SPECIFICATION

(11) **EP 4 632 855 B1**
(45) Date of publication and mention of the grant of the patent: **02.12.2026**
(21) Application number: 24169059.3
(22) Date of filing: 08.04.2024
(51) Int. Cl.: H01M 8/18, H01G 11/02, H01M 8/0232, H01M 8/0236, H01M 8/0258, H01M 8/22, C02F 1/469

(54) **FLOW ENERGY STORAGE DEVICE AND METHOD FOR GENERATING AND STORING ENERGY**
STROMSPEICHERVORRICHTUNG UND VERFAHREN ZUM ERZEUGEN UND SPEICHERN VON ENERGIE
DISPOSITIF DE STOCKAGE D'ÉNERGIE PAR ÉCOULEMENT ET PROCÉDÉ DE PRODUCTION ET DE STOCKAGE D'ÉNERGIE

(43) Date of publication of application: 15.10.2025
(73) Proprietor: Technische Universität Graz, 8010 Graz (AT)
(72) Inventor: Abbas, Qamar, 8010 Graz (AT); Islam, Tauhidul, 8020 Graz (AT); Gollas, Bernhard, 8010 Graz (AT)
(74) Representative: KLIMENT & HENHAPEL

(56) References cited:
- CN-B- 113 130 956
- JP-B2- 6 212 539
- US-A1- 2021 075 042
- US-A1- 2021 184 233
- US-A1- 2022 085 401

## Description

### FIELD OF THE INVENTION

The invention relates to a flow energy device with a capacitor flow cell having two half-cells separated by a porous separator membrane. The invention also relates to a method for generating, storing and preferably recovering energy, wherein a flow energy device according to the invention is used to carry out the method.

### PRIOR ART

Conventional redox flow batteries using vanadium-, iron/chromium-, bromine/polysulfide- or zinc/bromine-based electrolyte systems utilise aqueous electrolytes in both half-cells and typically use expensive ion-exchange membranes as separators between the two half-cells to maintain the net ionic charge in the two half-cells. Efficient ion-exchange membranes are traditionally made from perfluorinated materials, which are expensive and increase the overall cost of the conventional redox flow batteries mentioned above.

For example, the document US 11,552,324 B2 refers to a flow battery system with two half-cells for an anolyte circuit or for a catholyte circuit, which each have their own storage tank, and which are separated from each other by an ion-exchange membrane or a microporous membrane. The anolyte and the catholyte in the two half-cells can each contain zinc iodide as active material, a solid adsorbent with a large specific surface area, for example activated carbon particles, and polyethylene glycol (PEG) as an additive or complexing agent. Thus, two redox-active species are used here, namely zinc with a redox potential of -0.76 V in relation to the standard hydrogen electrode, and iodine with a redox potential of +0.54 V in relation to the standard hydrogen electrode. Polyethylene glycol forms in the zinc/iodine batteries a complex with iodide ions at high state of charge, which complex is an insoluble precipitation blocking ionic tunnels in the separator and causing resistance increase for ionic transfer.

During a charging process, the active material is captured in a charged state and stored on the surfaces of the adsorbent so that the concentrations of the active material in the electrolyte are reduced in the charged state and crossover is prevented. During a discharging process, the active material is desorbed from the adsorbent to the electrolyte and pumped into a flow battery stack for reaction. The flow battery stack according to one embodiment can comprise a graphite felt electrode, a copper foam electrode, a graphite current collector with a serpentine flow channel, and a hydrophilic polytetrafluoroethylene (PTFE) microporous separator membrane.

Disadvantageously, the flow battery system according to US 11,552,324 B2 uses two zinc/iodine battery electrodes at both positive and negative polarity, wherein the use of two battery processes reduces the output power and cycle life of said flow battery significantly. The construction of this flow battery system is complex and requires two separate circuits for the catholyte and anolyte, including two separate storage tanks for the two feed electrolytes. In addition, the use of two battery electrodes, that are combined within a single device but have to be separated from each other, increases the time required for charging and discharging the device. In other words, said flow battery takes comparably longer to charge.

Another embodiment of a flow energy storage system with slurry electrodes is disclosed in document US 9,793,063 B2. The electrode system applied here comprises a redox-active material made of an electrochemically active organic molecule based on a naphthalene or anthracene compound. The main component of the aqueous electrolyte which assists achieving high performance is sulphuric acid (H₂SO₄) - This is due to the fact that quinone-type organic molecules in an acidic medium are electrochemically active.

Disadvantageously, usage of sulphuric acid as component of an aqueous electrolyte according to US 9,793,063 B2 is environmentally harmful and requires a corrosion-resistant cell design with corrosion-resistant components, from corrosion-resistant current collectors and an acid-resistant separator membrane to specific cell seals and the corresponding acid-resistant cell body or cell housing. All these components must be chemically stable in the acidic medium, which impairs their industrial usability. Another disadvantage is the fact that said components, which have to be corrosion resistant and durable under acidic conditions, are expensive. Handling the electrolyte solutions during operation is also dangerous. Due to the use of sulphuric acid (H₂SO₄), the flow cell used in US 9,793,063 B2 can be polarized only to low voltage of 1.0 V, which reduces the output energy. Further relevant prior art include a flow battery in US2021075042A1 and a flow battery in CN113130956B.

### OBJECT OF THE INVENTION

The invention provides a flow energy storage device according to claim 1 and a method for generating, storing, and preferably recovering energy according to claim 12. Further embodiments are provided in the dependent claims.

It is therefore an object of the invention to overcome the aforesaid disadvantages of the prior art and to provide a flow energy storage device which
- is favourable in terms of both investment costs and ongoing operating and maintenance costs even for stationary applications, where the energy output and the rated output can be scaled independently of each other;
- prevents or at least minimises the risk of formation of metallic dendrites, short circuits or crossover of redox-active species;
- enables environmentally friendly energy storage due to usage of non-toxic electrolytes;
- allows a higher operating voltage of the capacitor compared to conventional devices based on acidic or basic electrolytes;
- enables high capacitance and energy values from two slurry electrodes where the charging mechanisms on each electrode are different;
- enables high power density due to the high conductivity of the electrolyte, resulting in lower ohmic losses;
- enables high energy efficiency and a long cycle life;
- enables a cost-effective operation possible without the need to dry the cell components; and
- enables safe operation without the risk of fire or explosion.

### DESCRIPTION OF THE INVENTION

In order to achieve the object of the invention set out above, a flow energy storage device according to the invention is provided, said flow energy storage device comprising:
- a feed container containing an uncharged aqueous electrolyte slurry;
- a capacitor flow cell having a first half-cell, a second half-cell and a porous separator membrane interposed between the first half-cell and the second half-cell, wherein the first and second half-cells are each connected to the feed container via a separate feed pipe, which is each equipped with a feed pump, and are each supplied with the same electrolyte slurry, wherein
- the first half-cell is configured to be electrically conductively coupled with a first positive current collector that is electrically connected to a positive pole of a DC voltage of a power supply, and
- the second half-cell is configured to be electrically conductively coupled with a second negative current collector that is electrically connected to a negative pole of the DC voltage of the power supply;
- wherein said aqueous electrolyte slurry comprises activated porous carbon particles and at least one electrolyte salt comprising redox-active iodide salt;
- whereby in a charged state in the first half-cell a first negative slurry electrode with charged negative electrode particles comprising iodine is formed, within which iodine is gathered at a carbon/iodine interface at the porous carbon particles, and in the second half-cell a second positive slurry electrode with charged positive electrode particles is formed, in which cation charges are stored on an electric double layer within the porous carbon particles.

Advantageously, the structure and design of the inventive flow energy storage is comparatively simple and inexpensive: A single common feed container containing an uncharged aqueous electrolyte slurry is connected to both the first half-cell and the second half-cell of the capacitor flow-through cell via separate feed pipes. Each feed pipe is equipped with a feed pump to enable the same electrolyte slurry to be fed from the common feed container into the two half-cells.

During operation of the flow energy storage device, the first half-cell is electrically conductively coupled to a first positive current collector that is in turn electrically connected to a positive pole of a DC voltage of a power supply. Similarly, the second half-cell is electrically conductively coupled to a second negative current collector that is electrically connected to a negative pole of the DC voltage of the power supply.

According to the invention at hand, the aqueous electrolyte slurry applied comprises activated porous carbon particles and at least one electrolyte salt comprising redox-active iodide salt. Thus, the term "comprising" includes both the meaning of at least one electrolyte salt that "contains" redox-active iodide salt and the meaning of at least one electrolyte salt that "consists of" redox-active iodide salt.

As activated porous carbon particles for example carbon electrode powder, carbon nanotubes (CNTs) or Graphene-based materials, or mixtures of the aforesaid materials can be used. Carbon black can also be a component of a mixture of said activated carbon materials.

In contrast to conventional electrolyte systems in which acidic or basic electrolytes are applied, the aqueous electrolyte slurry used to operate a flow energy storage device according to the invention is an aqueous electrolyte containing iodide salt dissolved in water with a neutral pH value. In the context of the present invention, a "neutral pH value" can be defined as a range of pH values of 5.0 to 8.0, preferably a range of pH values of 6.0 to 7.5, particularly preferably a pH value of approximately 7.0.

Usage of a neutral aqueous electrolyte with carbon powder to produce a slurry enables the use of low-cost cell components such as stainless-steel current collectors and a porous or fibrous separator membrane that is stable at neutral pH value - instead of expensive ion-exchange membranes. Thus, the cell components used in the flow energy storage device according to the invention are therefore cost-effective due to their stability and long-term durability, which is made possible by the use of environmentally friendly electrolyte components. Even another advantage is that due to usage of a pH neutral electrolyte, the voltage value of polarization can be further increased and the overall output energy of the inventive flow energy storage device can be enhanced.

Another advantageous feature of the present invention can be seen in the fact that the two half-cells are separated by a simple porous or fibrous separator membrane, whereby the slurry electrodes comprising a carbon-electrolyte mixture flow through the two half-cells during the charging process and are stored in the charged state after the charging process.

In a charged state in the first half-cell a first negative slurry electrode with charged negative electrode particles comprising iodine is formed, within which iodine is gathered at a carbon/iodine interface at the porous carbon particles. Again, in this context the term "comprising" iodine that is formed due to oxidised iodide ions in the electrolyte includes both the meaning of "containing" iodine that is formed or the meaning of "consisting of" iodine that is formed.

In the second half-cell a second positive slurry electrode with charged positive electrode particles is formed, in which cation charges are stored on an electric double layer within the porous network of carbon particles or carbon material slurry.

The adsorption of cation charges on the electric double layer prevents or at least reduces significantly the risk of dendrites formation, short-circuiting or cross-over of polyiodides which is generally a problem with metal/iodine batteries.

In a reverse step for energy recovery and provision of the stored charge to a consumer, the device according to the invention can be used for a discharging process in which the charged slurry electrodes can be pumped back into the feed container. The slurry electrodes only come into contact with the corresponding current collector during the charging and discharging process and can otherwise in a charged state be stored in separate storage containers.

Thus, the flow energy storage device according to the invention offers a viable and sustainable design for stationary applications.

Further advantages and favourable effects of the invention are set out in the following description of preferred embodiments according to the dependent patent claims and in the description of the figures.

Advantageously, in a preferred embodiment of a flow energy storage device according to the invention, as seen in downstream direction of the flow cell, a first charged slurry storage container and, separated therefrom, a second charged slurry storage container can be arranged, wherein the first charged slurry storage container is configured to store the first negative slurry electrode with charged negative electrode particles and is connected to the first half-cell via a slurry pipe, and wherein the second charged slurry storage container is configured to store the second positive slurry electrode with charged positive electrode particles and is connected to the second half-cell via a slurry pipe, wherein the slurry pipes are preferably each equipped with an auxiliary slurry pump.

Seen in the conveying direction of the electrolyte slurry or the slurry electrodes during the charging process, the two slurry storage containers are therefore arranged downstream of the capacitor flow cell. The two slurry storage containers are used to store the charged slurry electrodes separately during operation of the flow energy storage device. This increases the flexibility for storing electrical charges when using the inventive flow energy storage device.

In another preferred embodiment, a flow energy storage device according to the invention that is provided for energy recovery and provision of the stored charge to a consumer, the charged slurry electrodes can be conveyable from the respective half-cells or charged slurry storage containers into the feed container of the same flow energy storage device or into another feed container of another flow energy storage device connected thereto, whereby the negative electrode particles of the first negative slurry electrode and the positive electrode particles of the second positive slurry electrode are each dischargeable by means of current collectors electrically conductively coupled to the half-cells of the flow energy storage device or of another flow energy storage device, and wherein the consumer is electrically conductively connected to the current collectors.

Depending on the inventive design, the charging process and the subsequent discharging process can take place in one and the same flow energy storage device according to the invention or in at least two flow energy storage devices that are connected to each other.

In the first case or first embodiment of the invention, when the charging process and the subsequent discharging process take place in one and the same flow energy storage device, the charging process and the subsequent discharging process can take place in batch-wise operation or semi-continuously one after the other. During the charging process, the aqueous electrolyte slurry is first pumped from the feed container through the two half-cells, is charged accordingly and the first negative slurry electrode with charged negative electrode particles is stored in the first charged slurry storage container, while the second positive slurry electrode with charged positive electrode particles is stored in the second charged slurry storage container.

For subsequent energy recovery and provision of the stored charge to a consumer, the charged slurry electrodes can be conveyed from the respective half-cells or charged slurry storage containers into the feed container of the same flow energy storage device, whereby the negative electrode particles of the first negative slurry electrode and the positive electrode particles of the second positive slurry electrode are each discharged via contact with the respective current collectors that are electrically conductively coupled to the half-cells of the flow energy storage device, and wherein the consumer is electrically conductively connected to the current collectors. The respective feed pumps or auxiliary slurry pumps in the corresponding feed pipes or slurry pipes are each equipped in such a way that the delivery direction of the pumps can be switched between the charging process and the discharging process.

In the second case or second embodiment of the invention, if the charging process and the subsequent discharging process take place in two or more serially interconnected flow energy storage devices, the charging process and the discharging process can each take place in continuous operation, preferably simultaneously and in continuous operation.

In the first flow energy storage device according to the invention, the charging process can take place in continuous operation, for example. In the second device or a further device according to the invention, which is connected to the first device, after the first charging of the slurry electrodes in the first device, the discharging process in the second device can also take place in continuous operation. It is therefore possible with this system configuration of two or even more interconnected flow energy devices according to the invention, after the initial start-up of the system and after the slurry electrodes have been initially charged in the first device, to continue operation in such a way that the charging- and discharging cycle takes place in continuous operation and simultaneously.

Depending on the design of the first and second interconnected flow energy storage devices, a separate feed container and also two separate charged slurry storage containers can be provided for each of the interconnected devices. In this case, it can be useful if the feed containers of the first and second flow energy storage devices are connected to each other via pipework in order to be able to recycle the aqueous electrolyte slurry back to the feed container of the first device after the discharging process in the second device, so that the same aqueous electrolyte slurry - if necessary after adding a small make-up amount of electrolyte - is available again for the next charging process.

It is also expedient in this case, too, if the two charged slurry containers of the first and second flow energy storage devices are each connected to one another in order to be able to provide charged slurry electrodes, that have been charged in the first device, to the second device for the discharging process taking place there.

Alternatively, the interconnected first and second flow energy storage devices can also have only one common feed container and/or only one common first charged slurry storage container for storing the first negative slurry electrode and/or only one common second charged slurry storage container for storing the second positive slurry electrode. In this embodiment, the feed container of the first and second device can be designed in one piece. Accordingly, the first charged slurry storage container and/or the second charged slurry storage container of the first and second flow energy storage devices can also be designed in one piece or as a single part each.

This latter design offers the advantage that the aqueous electrolyte slurry does not have to be pumped between two interconnected feed containers and/or the charged slurry electrodes do not have to be pumped between two interconnected charged slurry storage containers.

To further enhance the energy and power performance of the inventive flow energy storage device in the operating state, the concentration of the at least one electrolyte salt comprising redox-active iodide salt in the aqueous electrolyte slurry can be selected in the range of 0,01 mol/L to 10 mol/L, preferably in the range of 0,1 mol/L to 5 mol/L, and particularly preferred of 2,0 mol/L.

Surprisingly, in-house experiments have shown that increasing the iodide electrolyte concentration in the indicated range, particularly preferably up to a concentration of 2.0 mol/L, can improve electrochemical performance by reducing ohmic losses and providing sufficient ionic species for charge storage in the carbon electrode.

A low ohmic loss means advantageously a high output power. Therefore, an increased iodide concentration in the electrolyte can favourably lead to a high output during operation of the flow energy storage device according to the invention.

It can be particularly advantageous if the at least one electrolyte salt in a flow energy storage device according to the invention is sodium iodide salt.

According to the present invention, a redox-active electrolyte based on an aqueous iodide solution with a neutral pH value is used, which makes it possible to construct the flow cell with inexpensive components and to operate it over a long period of time.

Sodium iodide (NaI) is a white, water-soluble solid comprising a mixture in a 1:1-ratio of sodium cations (Na⁺) and iodide anions (I⁻) in a crystal lattice. During operation of the flow energy storage device, sodium is deposited on an electric double layer of the negative slurry electrode during the charging process, while iodine stores charges on the positive electrode like a battery.

Thus, according to the invention, two different charge storage mechanisms are coupled together in the flow energy storage device. By coupling a battery electrode with a charge storage electrode of the electric double layer (EDL) type, the performance of the flow energy storage device can be improved and the time required for charging and discharging can be reduced, thereby increasing the overall efficiency of the inventive flow energy storage device.

A reduced charging/discharging time is also a performance-related parameter. A low discharge time means a high power output, whereby energy can be delivered at high speed.

In order to enable flexible use of the flow energy storage device according to the invention, the aqueous electrolyte slurry can advantageously additionally comprise at least one electrolyte salt with redox-inactive anions, or additionally comprise a mixture of at least two or more electrolyte salts with both redox-active and redox-inactive anions.

Or expressed in other words: The electrolyte salt may contain redox-inactive anions, or a mixture of salts with redox-active and redox-inactive anions together introduced at higher concentration that can be used as supporting electrolyte.

Examples of additional salts that serve as a supporting electrolyte and that can be added alone or in mixtures as redox-active components of the electrolyte are: NaNO₃, Na₂SO₄, KNO₃, K₂SO₄, LiNO₃, Li₂SO₄, LiTFSI, NaTFSI, KTFSI, CH₃COOLi, CH₃COONa, CH₃COOK, BeSO₄, Be(NO₃)₂, LiCl, NaCl, KCl, choline chloride, and/or choline nitrate.

According to a further advantageous embodiment of the flow energy storage device according to the invention, the activated porous carbon particles in the aqueous electrolyte slurry can be made of nanoporous carbon materials having a specific surface area in the range of 50 m²/g to 3.500 m²/g, preferably in the range of 200 m²/g to 3.000 m²/g, and particularly preferably of 2.000 m²/g.

It could be shown in own experiments that an increase of the specific surface area of the nanoporous carbon materials applied results in ... a certain trend.

The surface area can have a direct effect on the charging of the electric double layer (EDL) electrode, i.e. the negatively charged electrode that determines the total cell capacitance. Thus, increasing the carbon surface area therefore has the advantage of increasing the output energy of the flow energy storage device.

It can be particularly advantageous for a flow energy storage device according to the invention if the viscosity of the aqueous electrolyte slurry is in the range of 100 mPas to 20.000 mPas, preferably in the range of 200 mPas to 10.000 mPas, and particularly preferred of 1.000 mPas.

Both very high and very low viscosity can reduce performance due to the high ohmic loss. Therefore, an optimum viscosity of the slurry electrode is highly desirable in order to achieve maximum performance in the operation of the flow energy storage device according to the invention.

In another embodiment of the inventive flow energy storage device, the aqueous electrolyte slurry can further comprise carbon black, wherein the weight ratio of carbon black to activated carbon is in the range of 1:1 to 1:10, preferably is in the range of 1:5 to 1:10, and particularly preferably is 1:9.

Basically, carbon black, like carbon electrode powder, carbon nanotubes (CNTs) and graphene, can act as conductivity enhancer.

Thus, changing the ratio of the aforesaid components added can change the electronic conductivity of the electrolyte slurry, which can positively affect and enhance the output power of the flow energy storage device.

In even another embodiment of the inventive flow energy storage device, the ratio of total carbon material provided in the aqueous electrolyte slurry can be in the range of 1:1 to 1:10, and preferably is 1:5.

Changing the ratio of the total carbon material added can alter the electronic conductivity of the slurry that will influence the power output of the flow energy storage device. Here the factor of electrolyte to total carbon content, or the ratio of total carbon material provided in the aqueous electrolyte slurry, respectively, is related with the viscosity of the electrolyte slurry.

In a further embodiment of the invention, a flow energy storage device can be provided in a particularly cost-friendly, favourable design, wherein the porous separator membrane is made of a fibrous material, preferably made of a fibrous material containing or consisting of glass fibres.

In our own preliminary tests, the total thickness of the separator membrane applied was around 260 micrometres in a dry state, i.e. when the separator membrane was not impregnated with electrolyte or electrolyte slurry. The porosity of the separator membrane used is significantly lower than that of the characteristic size or diameter of the carbon particles used as electrodes.

The advantages and effects mentioned above in connection with the flow energy storage device according to the invention also apply mutatis mutandis to the following method for generating, storing and preferably recovering energy according to the invention.

Said inventive method for generating, storing and preferably recovering energy comprises the following steps:
- a- providing a flow energy storage device according to the invention;
- b- providing an uncharged aqueous electrolyte slurry comprising activated porous carbon particles and at least one electrolyte salt comprising redox-active iodide salt in a feed container of said flow energy storage device;
- c- stirring intensively said aqueous electrolyte slurry in the feed container;
- d- pumping said aqueous electrolyte slurry both into a first half-cell and, in parallel, into a second half-cell separated from the first cell by a porous separator membrane;
- e- electrically conductively connecting a first positive current collector of the first half-cell with a positive pole of a DC voltage of a power supply and a second negative current collector of the second half-cell with a negative pole of the DC voltage of the power supply;
- f- establishing a charged state of the aqueous electrolyte slurry in the first half-cell and forming a first negative slurry electrode with charged negative electrode particles comprising iodine, whereby said first negative slurry electrode having iodine gathered at a carbon/iodine interface at the porous carbon particles; and
- g- establishing a charged state of the aqueous electrolyte slurry in the second half-cell and forming a second positive slurry electrode with charged positive electrode particles, whereby said second negative slurry electrode having cation charges stored at an electric double layer within the porous carbon particles.

With regard to method step -a-, reference is made to the aforementioned advantages of using a flow energy storage device according to the invention, which also apply mutatis mutandis to the present process according to the invention.

With regard to method step -b-, an uncharged aqueous electrolyte slurry containing activated porous carbon particles and at least one electrolyte salt comprising redox-active iodide salt is advantageously provided in a feed container of the flow energy storage device and is supplied as a common feed electrolyte to both the first half-cell and the second half-cell.

With regard to method step -c-, intensive stirring of said aqueous electrolyte slurry in the feed container has the effect that the electrolyte slurry produced via pre-mixing of activated porous carbon particles like carbon electrode powder with aqueous iodide electrolyte and stored in the feed container retains as homogeneous a slurry as possible.

With regard to method step -d-, pumping said aqueous electrolyte slurry both into a first half-cell and, in parallel, into a second half-cell has the effect that the previously uncharged aqueous electrolyte slurry is pumped through both half cells of the flow cell at once. Reference is made to the advantages of using an inexpensive porous separator membrane between the first and second half-cells mentioned above, which of course also apply to the method in question.

Method step -e- has the advantageous effect that the respective current collectors, which are made for example of metal or metal alloys, are polarised.

Method step -f- has the effect that upon contact with the polarised positive current collector, the electrolyte slurry in the first half-cell is charged with electrolyte ions and solid iodine due to the oxidation of iodide ions in the electrolyte, forming a first negative slurry electrode.

Method step -g- has the effect that upon contact with the polarised negative current collector, the electrolyte slurry in the second half-cell is charged with cations present in the electrolyte, forming a second positive slurry electrode.

In a further development of the method according to the invention, in addition to method steps -a- to -g-, a further method step -h-can be carried out, in which step -h- said first negative slurry electrode is pumped to a first charged slurry storage container and said second positive slurry electrode is pumped to a second charged slurry storage container.

The charged slurry electrodes, i.e. the first negative slurry electrode with charged negative electrode particles containing iodine, and the second positive slurry electrode with charged positive electrode particles, are both stored separately in the two slurry storage containers during operation of the flow energy storage device.

To enable a continuous flow of slurry electrodes during the charging process, in a preferred embodiment of the inventive method at least the method steps -d- to -g-, preferably at least the method steps -d- to -h-, can be carried out simultaneously.

In a further development to provide an inventive method for energy recovery and provision of the stored charge to a consumer, the charged slurry electrodes are conveyed from the respective half cells or the charged slurry storage containers into the feed container of the same flow energy storage device or into another feed container of another flow energy storage device connected thereto, whereby the negative electrode particles of the first negative slurry electrode and the positive electrode particles of the second positive slurry electrode are each discharged by means of current collectors electrically conductively coupled to the half-cells of the flow energy storage device or of the another flow energy storage device, and wherein the consumer is electrically conductively connected to the current collectors.

As already mentioned in detail in regard to the various embodiments of the flow energy storage device according to the invention, for energy recovery and provision of the stored charge to a consumer, the charged slurry electrodes from the respective half cells or the charged slurry storage containers have to be conveyed back during the discharge process to the feed container of the same flow energy storage device or to another flow energy storage device in order to be able to extract the stored charges in terms of energy and power delivery.

Said method for energy recovery and provision of the stored charge to a consumer can also be operated in such a way that a continuous flow of slurry electrodes is possible both during the charging process and during the discharging process. Thus, unwanted precipitation of slurry electrodes can be avoided. Due to the fact that the charging process and also the discharging process or step of energy recovery, respectively, can both be carried out simultaneously in a continuous operation mode, efficiency of the inventive method can be enhanced.

### BRIEF DESCRIPTION OF THE DRAWINGS

The invention will now be explained in more detail below with reference to exemplary embodiments of the invention. The schematic drawings are provided by way of example and are intended to explain the concept of the invention, but shall in no way restrict it or even render it conclusively, wherein:
- **Fig. 1**: shows in a schematic process scheme a first embodiment of a flow energy storage device according to the invention;
- **Fig. 2**: shows in detail in a schematic way a carbon particle with random pores during the charging process;
- **Fig. 3**: shows in a schematic process scheme a second embodiment of two interconnected flow energy storage devices according to the invention;
- **Fig. 4**: shows in a diagram the galvanostatic potential-limited charging/discharging curves of experimental examples according to the invention at 50 mA/g (per active mass of carbon) from 0.0 V up to 1.2 V;
- **Fig. 5**: shows in a diagram the galvanostatic potential-limited charging/discharging curves of an experimental example according to the invention for 2 mol/L sodium iodide (NaI) under various specific current loads from 10 mA/g to 100 mA/g;
- **Fig. 6**: shows in a diagram a comparison of galvanostatic potential limited charging/discharging curves of experimental examples according to the invention at 50 mA/g from 0.0 V up to 1.2 V for 1, 1.3, and 2 mol/L sodium iodide (NaI);
- **Fig. 7**: shows in a diagram a comparison of cyclic voltammograms (normalized by gravimetric capacitance) of experimental examples according to the invention from 0.0 V up to 1.0 V at a scan rate of 1 mV/s for 1, 1.3, and 2 mol/L sodium iodide (NaI).

### WAYS OF CARRYING OUT THE INVENTION

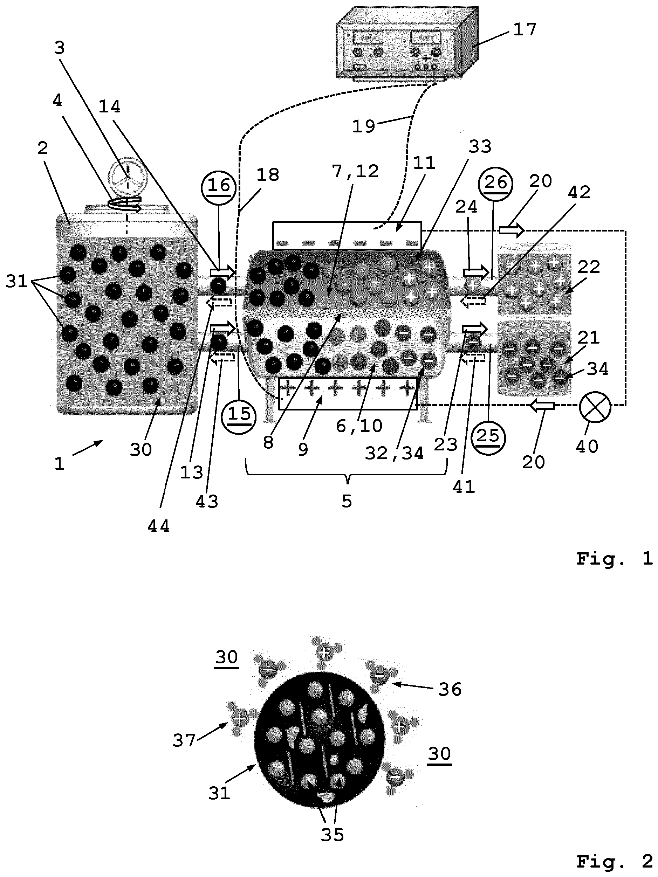

**Fig. 1** shows a first embodiment of a flow energy storage device 1 according to the invention. The flow energy storage device 1 comprises a feed container 2 that is equipped with a stirrer 3. A rotation direction 4 of the stirrer 3 is symbolised via an arrow 4.

A capacitor flow cell 5 having a first half-cell 6, a second half-cell 7 and a porous or fibrous separator membrane 8 interposed between the first half-cell 6 and the second half-cell 7 is connected to the feed container 2. The first half-cell 6 is connected via a first feed pipe 13 to the feed container 2. The second half-cell 7 is connected to the feed container 2 via a separate second feed pipe 14. The feed pipes 13,14 are each equipped with a feed pump 15,16. A flow direction of electrolyte in the pipe 13 during a charging process is symbolised via an arrow 13. Likewise, a flow direction of electrolyte in the pipe 14 during a charging process is symbolised via an arrow 14.

During a charging process, the first half-cell 6 is configured to be electrically conductively coupled with a first positive current collector 9 that is electrically connected via a connecting wire 18 to a positive pole of a DC voltage of a power supply 17. The second half-cell 7 is configured to be electrically conductively coupled with a second negative current collector 11 that is electrically connected via a connecting wire 19 to a negative pole of the DC voltage of the power supply 17. The connecting wires 18, 19 are marked as dashed lines.

During a discharging process of the flow energy storage device 1, an electrical circuit 20 between the polarised first positive current collector 9 and the polarised second negative current collector 11, into which a consumer 40 or an electrical load 40 is connected in between, is symbolised as an electron flow direction marked via an arrow 20. The electrical circuit 20 during the discharging process is marked as dashed line.

To prevent a short circuit during operation of the flow energy storage device 1 according to the invention, either the current collectors 9,11 are electrically connected to the power supply 17 during the charging process - or the current collectors 9,11 are electrically connected to a consumer 40 or an electrical load 40 during the discharging process.

During operation of the flow energy storage device 1 the feed container 2 contains an uncharged aqueous electrolyte slurry 30 that comprises activated porous carbon particles 31 and at least one electrolyte salt comprising redox-active iodide salt.

A charging process is symbolised via arrows 13,14 which indicate the conveying direction of the aqueous electrolyte slurry 30 from the feed container 2 into the two half-cells 6,7. During the charging process, in a charged state in the first half-cell 6 a first negative slurry electrode 10 with charged negative electrode particles 32 comprising iodine 34 is formed, within which iodine 34 is gathered at a carbon/iodine interface at the porous carbon particles 31. Conversely, during the charging process in the second half-cell 7 a second positive slurry electrode 12 with charged positive electrode particles 33 is formed, in which cation charges are stored on an electric double layer within the porous carbon particles 31.

Seen in the conveying direction 13,14 of the electrolyte slurry 30 during the charging process, or seen in downstream direction, symbolized via arrows 23,24, of the flow cell 5, a first charged slurry storage container 21 and, separated therefrom, a second charged slurry storage container 22 are arranged. The first charged slurry storage container 21 is configured to store the first negative slurry electrode 10 with charged negative electrode particles 32 and is connected to the first half-cell 6 via a slurry pipe 23. The second charged slurry storage container 22 is configured to store the second positive slurry electrode 12 with charged positive electrode particles 33 and is connected to the second half-cell 7 via a slurry pipe 24. A flow direction of the first negative slurry electrode 10 in the first slurry pipe 23 during the charging process is symbolised via an arrow 23. Likewise, a flow direction of the second positive slurry electrode 12 in the slurry pipe 24 during the charging process is symbolised via an arrow 24.

The slurry pipes 23,24 are for example each equipped with an auxiliary slurry pump 25,26.

For energy recovery and provision of the stored charge to a consumer 40, the charged slurry electrodes 10,12 are conveyed from the respective half-cells 6,7 or charged slurry storage containers 21,22 into the feed container 2 of the same flow energy storage device 1, whereby the negative electrode particles 32 of the first negative slurry electrode 10 and the positive electrode particles 33 of the second positive slurry electrode 12 are each discharged by means of the current collectors 9,11 electrically conductively coupled to the half-cells 6,7. The consumer 40 is electrically conductively connected to the current collectors 9,11.

For the discharging process when energy is recovered and stored charges are provided to a consumer 40, the first negative slurry electrode 10 that is stored in the first charged slurry storage container 21, is pumped in a first electrolyte drain pipe 41 in flow direction 41, which is symbolised via a dashed drawn arrow 41, back to the first half-cell 6. The negative electrode particles 32 of the first negative slurry electrode 10 are discharged by the first positive current collector 9 conductively coupled to the consumer 40.

The second positive slurry electrode 12 that is stored in the second charged slurry storage container 22, is pumped in a second electrolyte drain pipe 42 in flow direction 42, which is symbolised via a dashed drawn arrow 42, back to the second half-cell 7. The positive electrode particles 33 of the second positive slurry electrode 12 are discharged by the second negative current collector 11 conductively coupled to the consumer 40 or electrical load, respectively. As shown in Fig. 1, the first electrolyte drain pipe 41 corresponds here to the first slurry pipe 23 or coincides with it. The second electrolyte drain pipe 42 corresponds here to the second slurry pipe 24 or coincides with it.

In the further course of the discharging process, the first negative slurry electrode 10 is conveyed back or regenerated, respectively, after discharging from the first half-cell 6 back to the feed container 2 via a first cell drain pipe 43. The flow direction during the discharging process in the first cell drain pipe 43 is symbolised via a dashed drawn arrow 43. Similarly, in the further course of the discharge process, the second positive slurry electrode 12 is conveyed back or regenerated, respectively, into the feed container 2 via a second cell drain pipe 44 after discharge from the second half-cell 7. The flow direction during the discharging process in the second cell drain pipe 44 is symbolised via a dashed drawn arrow 44. As shown in Fig. 1, the first cell drain pipe 43 corresponds here to the first feed pipe 13 or coincides with it. The second cell drain pipe 44 corresponds here to the second feed pipe 14 or coincides with it. As a result of the discharge process, the regenerated uncharged aqueous electrolyte slurry 30 is collected in the feed container 2 again and can be reused for another charging/discharging cycle.

**Fig. 2** shows in detail in a schematic way a carbon particle 31 with random pores 35 of different pore sizes during the charging process. The carbon particle 31 is surrounded by aqueous electrolyte slurry 30 comprising iodide ions 36, or solvated anions, as well as solvated cations 37. Upon charging step, the carbon pores 35 are filled with the anions or cations of the respective positive 9 or negative 11 current collector.

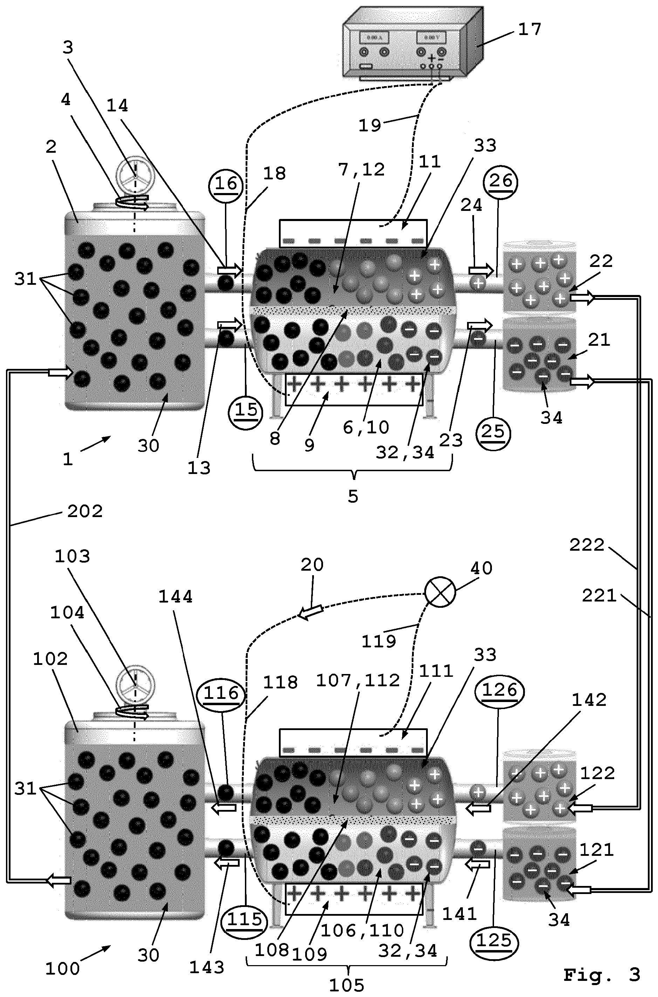

**Fig. 3** shows in a schematic process scheme a second embodiment of two interconnected flow energy storage devices 1, 100 according to the invention.

In the first flow energy storage device 1 according to the invention, which essentially corresponds to the flow energy storage device 1 described above in Fig. 1, the charging process can take place in continuous operation, for example. In Fig. 3, the same reference numerals as in Fig. 1 are used for identical or similar components or units. To avoid unnecessary repetition, reference is made in regard to the first flow energy storage device 1 to the description of Fig. 1.

According to the embodiment shown in Fig. 3, the charging process takes place in the first flow energy storage device 1. The positive current collector 9 of the first half-cell 6 is electrically coupled via a connecting wire 18 to a positive pole of a DC voltage of a power supply 17. The second negative current collector 11 of the second half-cell 7 is electrically coupled via a connecting wire 19 to a negative pole of the DC voltage of the power supply 17. The connecting wires 18, 19 are marked as dashed lines.

In the second flow energy storage device 100 according to the invention, which is connected to the first flow energy storage device 1, after the initial charging of the slurry electrodes 10,12 in the first flow energy storage device 1, the discharging process in the second flow energy storage device 100 can also take place in continuous operation. It is therefore possible with this system configuration of two or even more interconnected flow energy storage devices 1,100 according to the invention, after the initial start-up of the system and after the slurry electrodes 10,12 have been charged in the first flow energy storage device 1, to continue operation in such a way that the charging process and the discharging process take place in continuous operation and simultaneously.

The design of the second flow energy storage device 100, that is applied here for the discharging process, essentially corresponds to the flow energy storage device 1.

For the discharging process, when energy is recovered and stored charges are provided to a consumer 40, the first negative slurry electrode 10 that is stored in the first charged slurry storage container 21 of the first flow energy storage device 1 is conveyed via a first connecting pipe 221 that connects the first charged slurry storage container 21 of the first flow energy storage device 1 with a respective first charged slurry storage container 121 of the second flow energy storage device 100. The negative slurry electrode 10 conveyed to the second flow energy storage device 100 is hereinafter referred to as negative slurry electrode 110.

The second positive slurry electrode 12 that is stored in the second charged slurry storage container 22 of the first flow energy storage device 1 is conveyed via a second connecting pipe 222 that connects the second charged slurry storage container 22 of the first flow energy storage device 1 with a respective second charged slurry storage container 122 of the second flow energy storage device 100. The positive slurry electrode 12 conveyed to the second flow energy storage device 100 is hereinafter referred to as positive slurry electrode 112.

Said second flow energy storage device 100 further comprises a feed container 102 with a stirrer 103, wherein a rotation direction 104 of the stirrer 103 is symbolized via an arrow 104. Furthermore, the second flow energy storage device 100 comprises a capacitor flow cell 105 with a first half-cell 106, a second half-cell 107 and a porous or fibrous separator membrane 108 interposed between the first half-cell 106 and the second half-cell 107 is connected to the feed container 102. The first half-cell 106 is connected to the feed container 102 via a first cell drain pipe 143, as viewed in the downstream direction during the discharge process. The second half-cell 107 is connected to the feed container 102 via a separate second cell drain pipe 144, as viewed in the downstream direction during the discharge process.

The cell drain pipes 143,144 are each equipped with a feed pump 115,116. A flow direction of electrolyte in the pipe 143 during the discharging process is symbolised via an arrow 143. Likewise, a flow direction of electrolyte in the pipe 144 during the discharging process is symbolised via an arrow 144.

The first charged slurry storage container 121 is connected via a first electrolyte drain pipe 141 to the first half-cell 106 of the second flow energy storage device 100. The first electrolyte drain pipe 141 is equipped with a first auxiliary slurry pump 125. During the discharging process the flow direction of the first negative slurry electrode 110 in the first electrolyte drain pipe 141 is symbolised via an arrow 141. The second charged slurry storage container 122 is connected via a second electrolyte drain pipe 142 to the second half-cell 107 of the second flow energy storage device 100. The second electrolyte drain pipe 142 is equipped with a second auxiliary slurry pump 126. During the discharging process the flow direction of the second positive slurry electrode 112 in the second electrolyte drain pipe 142 is symbolised via an arrow 142.

As the discharging process takes place in the interconnected second flow energy storage device 100, here an electrical circuit 20 between a polarised first positive current collector 109, that is conductively connected to the first half-cell 106, and a polarised second negative current collector 111, that is conductively connected to the second half-cell 107, into which a consumer 40 or an electrical load 40 is connected in between, is symbolised in electron flow direction marked via an arrow 20. The first positive current collector 109 is electrically coupled via a connecting wire 118 to the consumer 40.

The second negative current collector 111 is electrically coupled via a connecting wire 119 to the consumer 40. The connecting wires 118, 119 are marked as dashed lines.

For the discharging process, when energy is recovered and stored charges are provided to a consumer 40, the first negative slurry electrode 110 that is stored in the first charged slurry storage container 121, is pumped in a first electrolyte drain pipe 141 in flow direction 141 to the first half-cell 106 of the second flow energy storage device 100. The negative electrode particles 32 of the first negative slurry electrode 110 are discharged by the first positive current collector 109, that is conductively coupled to the consumer 40.

The second positive slurry electrode 112 that is stored in the second charged slurry storage container 122, is pumped in a second electrolyte drain pipe 142 in flow direction 142 back to the second half-cell 107 of the second flow energy storage device 100. The positive electrode particles 33 of the second positive slurry electrode 112 are discharged by the second negative current collector 111, that is conductively coupled to the consumer 40 or electrical load, respectively.

In the further course of the discharging process, the first negative slurry electrode 110 is returned or regenerated back into the feed container 102 via the first cell drain pipe 143 after discharge from the first half-cell 106. Similarly, the second positive slurry electrode 112 is conveyed back or regenerated, respectively, into the feed container 102 via the second cell drain pipe 144 after discharge from the second half-cell 107.

The feed container 102 of the second flow energy storage device 100 is connected via a connecting pipe 202 to the feed container 2 of the first flow energy storage device 1. Thus, the uncharged aqueous electrolyte slurry 30 collected in the feed container 102 can be recycled to and reused as starting material in the feed container 2 of the first flow energy storage device 1 for the next following charging/discharging cycle.

Depending on the design of the first 1 and second 100 or further interconnected flow energy storage devices, a separate feed container 2,102 and also two separate charged slurry storage containers 21,121 and 22,122, respectively, can be provided for each of the interconnected devices. This embodiment is shown in Fig. 3. The feed containers 2,102 of the first and second flow energy storage devices 1,100 are connected to each other via pipework 202 in order to be able to recycle the aqueous electrolyte slurry 30 back to the feed container 2 of the first device 1 after the discharging process in the second device 100, so that the same aqueous electrolyte slurry 30 - if necessary after adding a small make-up amount of electrolyte - is available again for the next charging process.

Here in Fig. 3 also the two charged slurry containers 21,121 and 22,122 of the first 1 and second 100 flow energy storage devices are each connected to one another via pipes 221 and 222, respectively, in order to be able to provide charged slurry electrodes, that have been charged in the first device, to the second device for the discharging process taking place there.

Alternatively, the interconnected first and second flow energy storage devices 1,100 can also have only one common feed container 2 and/or only one common first charged slurry storage container 21 for storing the first negative slurry electrode 10 and/or only one common second charged slurry storage container 22 for storing the second positive slurry electrode 12. In this embodiment, the feed container 2 of the first 1 and second 100 flow energy storage device can be designed in one piece. Accordingly, the first charged slurry storage container 21 and/or the second charged slurry storage container 22 of the first 1 and second 100 flow energy storage devices can also be designed in one piece or as a single part each.

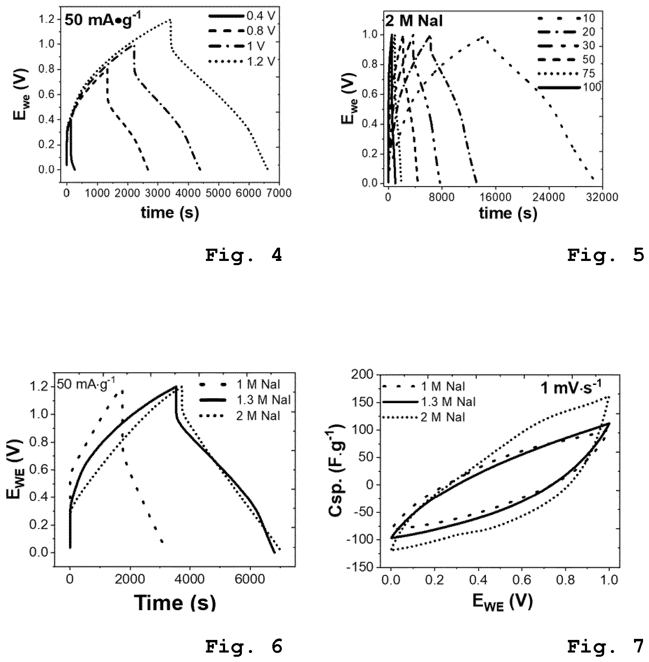

**Figures 4 to 7** refer to the following experimental examples according to the invention. For the experimental examples, a flow energy storage device according to the embodiment as shown in Fig. 1 is used. In general, the aqueous electrolyte slurry is each made from activated porous carbon particles with porous structures and a specific surface area of approximately 2300 m²/g. The aqueous electrolyte slurry is prepared by stirring a mixture of 90 wt.% of activated carbon powder type YP80F (provided for example by Kuraray, Japan, with a BET surface area of appr. 2,271 m²/g) and 10 wt.% of carbon black type C65 (provided for example by Imerys, with a BET surface area of appr. 62 m²/g) in water to obtain a homogeneous slurry. The viscosity of the slurry was varied between 100 mPs to 20000 mPs, and was adjusted preferably at 1000 mPs (millipascal-seconds or centipoise) with high electrical conductivity, at the ratio of total carbon material provided in the aqueous slurry of between 1:1 and 1:10, and adjusted preferably at a mass ratio of 1:5 of carbon to electrolyte.

To make the electrolyte slurry, the water and carbon material are mixed first and then an estimated amount of sodium iodide salt is added to maintain a desired electrolyte concentration.

Afterwards, two half-cells each containing the same slurry are coupled while separated by a porous or fibrous separator membrane made of glass fibres with a total thickness of the separator membrane of about 260 µm when it is not soaked with slurry or electrolyte, and introduced into a capacitor flow cell with casing lined with stainless steel current collectors.

### Experimental Example A (2 mol/L sodium iodide)

The aqueous electrolyte slurry of the flow energy storage device is made - as indicated above - from activated carbon with a specific surface area of 2300 m²/g, with a viscosity of the slurry of appr. 1000 mPs with high electrical conductivity, at the carbon to electrolyte ratio of 1:5 (mass ratio). To make the slurry, the water and carbon are mixed first and then an estimated amount of sodium iodide salt is added to maintain a desired electrolyte concentration of 2 mol/L (NaI).

At a current density of 0.2 A/g (per active mass of carbon) and voltage between 0 V and up to 1.2 V, the flow energy storage device using this slurry electrode exhibits an energy density of 9 Wh/kg at a power density of 49 W/kg. During different specific current load tests and long-term cycling tests at 200 mA/g up to 1.2 V for 1000 galvanostatic charge/discharge cycles, the flow energy storage device according to the invention maintains constant energy efficiency and energy density. Embodiments of the present example A are shown in **Figures 4 and 5****.**

### Experimental Example B (1.3 mol/L sodium iodide)

Example B has been repeated - under otherwise identical conditions of Example A - at an electrolyte concentration of 1.3 mol/L sodium iodide (NaI).

At a current density of 0.2 A/g (per active mass of carbon) and voltage between 0 V and up to 1.2 V, the flow energy storage device using this slurry electrode exhibits an energy density of 8 Wh/kg at a power density of 40 W/kg. During different specific current load tests and long-term cycling tests at 200 mA/g up to 1.2 V for 1000 galvanostatic charge/discharge cycles, the flow energy storage device maintains constant energy efficiency and energy density. Embodiments of the present example B are shown in **Figures 6 and 7****.**

### Example C (1 mol/L sodium iodide)

Example C has been repeated - under otherwise identical conditions of Example A - at an electrolyte concentration of 1.0 mol/L sodium iodide (NaI).

At a current density of 0.2 A/g (per active mass of carbon) and voltage between 0 V and up to 1.2 V, the flow energy storage device using this slurry electrode exhibits an energy density of 5 Wh/kg at a power density of 30 W/kg. During different specific current load tests and long-term cycling tests at 200 mA/g up to 1.2 V for 1000 galvanostatic charge/discharge cycles, the flow energy storage device maintains constant energy efficiency and energy density. Embodiments of the present example are shown in **Figures 6 and 7****.**

**Fig. 4** shows a performance comparison of flow energy storage device with carbon-based slurry electrodes for the electrolyte concentration of Example A containing sodium iodide electrolyte at 2 mol/L (NaI). Stainless-steel current collectors are applied. The galvanostatic potential-limited charging/discharging curves at 50 mA/g (per active mass of carbon) are varied from 0.0 V up to 1.2 V and various specific current loads from 10 mA/g to 100 mA/g.

**Fig. 5** shows the galvanostatic potential-limited charging/discharging curves for the electrolyte concentration of Example A containing sodium iodide electrolyte at 2 mol/L (NaI) under various specific current loads from 10 mA/g to 100 mA/g.

**Fig. 6** shows a comparison of galvanostatic potential limited charging/discharging curves of the Examples A, B and C at 50 mA/g from 0.0 V up to 1.2 V for 2 mol/L (Example A), 1.3 mol/L (Example B), and 1 mol/L (Example C) of sodium iodide (NaI).

With increasing sodium iodide redox electrolyte concentrations, for instance 1, 1.3, and 2 mol/L at a current density of 50 mA/g and a voltage up to 1.2 V, the inventive flow energy storage device exhibits an energy density of 5, 8, and 9 Wh/kg and a power density of 30, 40 and 49 W/kg, respectively.

**Fig. 7** shows a comparison of cyclic voltammograms (normalized by gravimetric capacitance) from 0.0 V up to 1.0 V at a scan rate of 1 mV/s for the Examples A, B and C at 2, 1.3, and 1 mol/L sodium iodide (NaI).

The own experimental tests have shown performed that the flow energy storage device according to the invention maintains a constant energy efficiency and energy density during various specific current load tests and long-term cycling tests at 50 mA/g up to 1.2 V for 1000 galvanostatic charge/discharge cycles. The order of magnitude of the specific capacity was determined to be 1 > 1.3 > 2 mol/L sodium iodide (NaI).

It could be shown that the recorded trend sequences of energy density, power density and specific capacity are dependent on the concentration of redox-active species in the electrolyte slurry and can be enhanced with increasing concentration of sodium iodide in the electrolyte at least up to a concentration of 2 mol/L sodium iodide (NaI).

### REFERENCE NUMERALS

- 1: flow energy storage device
- 2: feed container
- 3: stirrer
- 4: rotation direction (arrow)
- 5: capacitor flow cell
- 6: (first) half-cell
- 7: (second) half-cell
- 8: fibrous separator membrane
- 9: (first) positive current collector
- 10: (first) negative slurry electrode
- 11: (second) negative current collector
- 12: (second) positive slurry electrode
- 13: (first) feed pipe; charging process (arrow)
- 14: (second) feed pipe; charging process (arrow)
- 15: (first) feed pump
- 16: (second) feed pump
- 17: power supply
- 18: connecting wire
- 19: connecting wire
- 20: electrical circuit; electron flow direction (arrow)
- 21: (first) charged slurry storage container
- 22: (second) charged slurry storage container
- 23: (first) slurry pipe; charging process (arrow)
- 24: (second) slurry pipe; charging process (arrow)
- 25: (first) auxiliary slurry pump
- 26: (second) auxiliary slurry pump
- 30: aqueous electrolyte slurry
- 31: carbon particle
- 32: charged negative electrode particle; iodine
- 33: charged positive electrode particle
- 34: (solid) iodine
- 35: carbon pores
- 36: iodide ion; solvated anion
- 37: solvated cation
- 40: consumer; electrical load
- 41: (first) electrolyte drain pipe; discharging process (arrow)
- 42: (second) electrolyte drain pipe; discharging process (arrow)
- 43: (first) cell drain pipe; discharging process (arrow)
- 44: (second) cell drain pipe; discharging process (arrow)
- 100: another flow energy storage device
- 102: feed container
- 103: stirrer
- 104: rotation direction (arrow)
- 105: capacitor flow cell
- 106: (first) half-cell
- 107: (second) half-cell
- 108: fibrous separator membrane
- 109: (first) positive current collector
- 110: (first) negative slurry electrode
- 111: (second) negative current collector
- 112: (second) positive slurry electrode
- 115: (first) feed pump
- 116: (second) feed pump
- 118: connecting wire
- 119: connecting wire
- 121: (first) charged slurry storage container
- 122: (second) charged slurry storage container
- 125: (first) auxiliary slurry pump
- 126: (second) auxiliary slurry pump
- 141: (first) electrolyte drain pipe; discharging process (arrow)
- 142: (second) electrolyte drain pipe; discharging process (arrow)
- 143: (first) cell drain pipe; discharging process (arrow)
- 144: (second) cell drain pipe; discharging process (arrow)
- 202: connecting pipe between feed containers
- 221: connecting pipe between slurry storage containers
- 222: connecting pipe between slurry storage containers

## Claims

1. Flow energy storage device (1), comprising:
- a feed container (2) containing an uncharged aqueous electrolyte slurry (30);
- a capacitor flow cell (5) having a first half-cell (6), a second half-cell (7) and a porous separator membrane (8) interposed between the first half-cell (6) and the second half-cell (7), wherein the first (6) and second (7) half-cells are each connected to the feed container (2) via a separate feed pipe (13, 14), which is each equipped with a feed pump (15,16), and are each supplied with the same electrolyte slurry (30), wherein
- the first half-cell (6) is configured to be electrically conductively coupled with a first positive current collector (9) that is electrically connected (18) to a positive pole of a DC voltage of a power supply (17), and
- the second half-cell (7) is configured to be electrically conductively coupled with a second negative current collector (11) that is electrically connected (19) to a negative pole of the DC voltage of the power supply (17);
- wherein said aqueous electrolyte slurry (30) comprises activated porous carbon particles (31) and at least one electrolyte salt comprising redox-active iodide salt;
- whereby in a charged state in the first half-cell (6) a first negative slurry electrode (10) with charged negative electrode particles (32) comprising iodine (34) is formed, within which iodine (34) is gathered at a carbon/iodine interface at the porous carbon particles (31), and in the second half-cell (7) a second positive slurry electrode (12) with charged positive electrode particles (33) is formed, in which cation (37) charges are stored on an electric double layer within the porous carbon particles (31).

2. Flow energy storage device (1) according to claim 1, wherein as seen in downstream direction (23, 24) of the flow cell (5), a first charged slurry storage container (21) and, separated therefrom, a second charged slurry storage container (22) are arranged, wherein the first charged slurry storage container (21) is configured to store the first negative slurry electrode (10) with charged negative electrode particles (32) and is connected to the first half-cell (6) via a slurry pipe (23), and wherein the second charged slurry storage container (22) is configured to store the second positive slurry electrode (12) with charged positive electrode particles (33) and is connected to the second half-cell (7) via a slurry pipe (24), wherein the slurry pipes (23,24) are preferably each equipped with an auxiliary slurry pump (25,26).

3. Flow energy storage device (1) according to one of claims 1 or 2, wherein for energy recovery and provision of the stored charge to a consumer (40), the charged slurry electrodes (10,12) are conveyable from the respective half-cells (6,7) or charged slurry storage containers (21,22) into the feed container (2) of the same flow energy storage device (1) or into another feed container (102) of another flow energy storage device (100) connected thereto, whereby the negative electrode particles (32) of the first negative slurry electrode (10) and the positive electrode particles (33) of the second positive slurry electrode (12) are each dischargeable by means of current collectors (9,11; 109,111) electrically conductively coupled to the half-cells (6,7; 106,107) of the flow energy storage device (1) or of the another flow energy storage device (100), and wherein the consumer (40) is electrically conductively connected to the current collectors (9,11; 109,111).

4. Flow energy storage device (1) according to any one of claims 1 to 3, wherein the concentration of the at least one electrolyte salt comprising redox-active iodide salt in the aqueous electrolyte slurry (30) is in the range of 0,01 mol/L to 10 mol/L, preferably in the range of 0,1 mol/L to 5 mol/L, and particularly preferred of 2,0 mol/L.

5. Flow energy storage device (1) according to any one of claims 1 to 4, wherein the at least one electrolyte salt is sodium iodide salt.

6. Flow energy storage device (1) according to any one of claims 1 to 5, wherein the aqueous electrolyte slurry (30) further comprises at least one electrolyte salt with redox-inactive anions, or further comprises a mixture of at least two or more electrolyte salts with both redox-active and redox-inactive anions.

7. Flow energy storage device (1) according to any one of claims 1 to 6, wherein the activated porous carbon particles (31) in the aqueous electrolyte slurry (30) are made of nanoporous carbon materials having a specific surface area in the range of 50 m²/g to 3.500 m²/g, preferably in the range of 200 m²/g to 3.000 m²/g, and particularly preferably of 2.000 m²/g.

8. Flow energy storage device (1) according to any one of claims 1 to 7, wherein the viscosity of the aqueous electrolyte slurry (30) is in the range of 100 mPas to 20.000 mPas, preferably in the range of 200 mPas to 10.000 mPas, and particularly preferred of 1.000 mPas.

9. Flow energy storage device (1) according to any one of claims 1 to 8, wherein the aqueous electrolyte slurry (30) further comprises carbon black, wherein the weight ratio of carbon black to activated carbon is in the range of 1:1 to 1:10, preferably is in the range of 1:5 to 1:10, and particularly preferably is 1:9.

10. Flow energy storage device (1) according to any one of claims 1 to 9, wherein the ratio of total carbon material provided in the aqueous electrolyte slurry (30) is in the range of 1:1 to 1:10, preferably is 1:5.

11. Flow energy storage device (1) according to any one of claims 1 to 10, wherein the porous separator membrane (8) is made of a fibrous material, preferably made of a fibrous material containing or consisting of glass fibres.

12. Method for generating, storing and preferably recovering energy, said method comprising the following steps:
- a- providing a flow energy storage device (1) according to any one of claims 1 to 11;
- b- providing an uncharged aqueous electrolyte slurry (30) comprising activated porous carbon particles (31) and at least one electrolyte salt comprising redox-active iodide salt in a feed container (2) of said flow energy storage device (1);
- c- stirring (3) intensively said aqueous electrolyte slurry (30) in the feed container (2);
- d- pumping (15, 16) said aqueous electrolyte slurry (30) both into a first half-cell (6) and, in parallel, into a second half-cell (7) separated from the first cell (6) by a porous separator membrane (8);
- e- electrically conductively connecting a first positive current collector (9) of the first half-cell (6) with a positive pole of a DC voltage of a power supply (17) and a second negative current collector (11) of the second half-cell (7) with a negative pole of the DC voltage of the power supply (17);
- f- establishing a charged state of the aqueous electrolyte slurry (30) in the first half-cell (6) and forming a first negative slurry electrode (10) with charged negative electrode particles (32) comprising iodine (34), whereby said first negative slurry electrode (10) having iodine (34) gathered at a carbon/iodine interface at the porous carbon particles (31); and
- g- establishing a charged state of the aqueous electrolyte slurry (30) in the second half-cell (7) and forming a second positive slurry electrode (12) with charged positive electrode particles (33), whereby said second negative slurry electrode (12) having cation (37) charges stored at an electric double layer within the porous carbon particles (31).

13. Method according to claim 12, wherein in addition to steps -a- to -g-, a further step -h- is carried out, in which step -h- said first negative slurry electrode (10) is pumped (15;25) to a first charged slurry storage container (21) and said second positive slurry electrode (12) is pumped (16;26) to a second charged slurry storage container (22).

14. Method according to one of claims 12 or 13, wherein at least steps -d- to -g-, preferably at least steps -d- to -h-, are carried out simultaneously.

15. Method according to any one of claims 12 to 14, wherein for energy recovery and provision of the stored charge to a consumer (40), the charged slurry electrodes (10,12) are conveyed from the respective half cells (6,7) or the charged slurry storage containers (21,22) into the feed container (2) of the same flow energy storage device (1) or into another feed container (102) of another flow energy storage device (100) connected thereto, whereby the negative electrode particles (32) of the first negative slurry electrode (10) and the positive electrode particles (33) of the second positive slurry electrode (12) are each discharged by means of current collectors (9,11; 109,111) electrically conductively coupled to the half-cells (6,7; 106,107) of the flow energy storage device (1) or of the another flow energy storage device (100), and wherein the consumer (40) is electrically conductively connected to the current collectors (9,11; 109,111).

## Patentansprüche

1. Stromspeichervorrichtung (1), umfassend:
- einen Zulaufbehälter (2), der ein wässriges Elektrolyt-Slurry (30) in einem ungeladenen Zustand enthält;
- eine Kondensator-Flow-Zelle (5) mit einer ersten Halbzelle (6), einer zweiten Halbzelle (7) und einer porösen Separatormembran (8), die zwischen der ersten Halbzelle (6) und der zweiten Halbzelle (7) eingesetzt ist, wobei die erste (6) und die zweite (7) Halbzelle jeweils mit dem Zulaufbehälter (2) über ein separates Zulaufrohr (13,14) verbunden sind, die jeweils mit einer Zulaufpumpe (15,16) ausgestattet sind, und die jeweils mit demselben Elektrolyt-Slurry (30) versorgt werden, wobei
- die erste Halbzelle (6) dafür konfiguriert ist, elektrisch leitend mit einem ersten positiven Stromabnehmer (9) gekoppelt zu sein, der mit einem positiven Pol einer Gleichspannung einer Stromversorgung (17) elektrisch verbunden (18) ist, und
- die zweite Halbzelle (7) dafür konfiguriert ist, elektrisch leitend mit einem zweiten negativen Stromabnehmer (11) gekoppelt zu sein, der mit einem negativen Pol der Gleichspannung der Stromversorgung (17) elektrisch verbunden (19) ist;
- wobei das genannte wässrige Elektrolyt-Slurry (30) aktivierte poröse Kohlenstoffpartikel (31) und mindestens ein Elektrolytsalz mit redoxaktivem Iodidsalz umfasst;
- wodurch sich in einem geladenen Zustand in der ersten Halbzelle (6) eine erste negative Slurry-Elektrode (10) mit geladenen negativen Elektrodenpartikeln (32), die Iod (34) umfassen, bildet, in der Iod (34) an einer Kohlenstoff/Iod-Grenzfläche an den porösen Kohlenstoffpartikeln (31) gesammelt ist, und sich in der zweiten Halbzelle (7) eine zweite positive Slurry-Elektrode (12) mit geladenen positiven Elektrodenpartikeln (33) bildet, in der Kationen-Ladungen (37) an einer elektrischen Doppelschicht in den porösen Kohlenstoffpartikeln (31) gespeichert sind.

2. Stromspeichervorrichtung (1) nach Anspruch 1, wobei in der Verlaufsrichtung (23,24) der Flow-Zelle (5) betrachtet, ein erster Speicherbehälter für Slurry im geladenen Zustand (21) und separat hiervon ein zweiter Speicherbehälter für Slurry im geladenen Zustand (22) angeordnet sind, wobei der erste Speicherbehälter für Slurry im geladenen Zustand (21) dafür konfiguriert ist, die erste negative Slurry-Elektrode (10) mit geladenen negativen Elektrodenpartikeln (32) zu speichern, und mit der ersten Halbzelle (6) über ein Slurry-Rohr (23) verbunden ist, und wobei der zweite Speicherbehälter für Slurry im geladenen Zustand (22) dafür konfiguriert ist, die zweite positive Slurry-Elektrode (12) mit geladenen positiven Elektrodenpartikeln (33) zu speichern, und mit der zweiten Halbzelle (7) über ein Slurry-Rohr (24) verbunden ist, wobei die Slurry-Rohre (23,24) vorzugsweise jeweils mit einer Slurry-Hilfspumpe (25,26) ausgestattet sind.

3. Stromspeichervorrichtung (1) nach einem der Ansprüche 1 oder 2, wobei zur Energierückgewinnung und Bereitstellung der gespeicherten Ladung an einen Verbraucher (40) die geladenen Slurry-Elektroden (10,12) von den jeweiligen Halbzellen (6,7) oder Speicherbehältern für Slurry im geladenen Zustand (21,22) in den Zulaufbehälter (2) derselben Stromspeichervorrichtung (1) oder in einen weiteren Zulaufbehälter (102) einer mit der Stromspeichervorrichtung verbundenen weiteren Stromspeichervorrichtung (100) beförderbar sind, wodurch die negativen Elektrodenpartikel (32) der ersten negativen Slurry-Elektrode (10) und die positiven Elektrodenpartikel (33) der zweiten positiven Slurry-Elektrode (12) jeweils mittels Stromabnehmern (9,11; 109,111) entladbar sind, die elektrisch leitend mit den Halbzellen (6,7; 106,107) der Stromspeichervorrichtung (1) oder der weiteren Stromspeichervorrichtung (100) gekoppelt sind, und wobei der Verbraucher (40) elektrisch leitend mit den Stromabnehmern (9,11; 109,111) verbunden ist.

4. Stromspeichervorrichtung (1) nach einem der Ansprüche 1 bis 3, wobei die Konzentration des mindestens einen Elektrolytsalzes, das redoxaktives Iodidsalz umfasst, in dem wässrigen Elektrolyt-Slurry (30) im Bereich von 0,01 mol/l bis 10 mol/l, bevorzugt von 0,1 mol/l bis 5 mol/l, besonders bevorzugt bei 2,0 mol/l, liegt.

5. Stromspeichervorrichtung (1) nach einem der Ansprüche 1 bis 4, wobei das mindestens eine Elektrolytsalz Natriumiodid-Salz ist.

6. Stromspeichervorrichtung (1) nach einem der Ansprüche 1 bis 5, wobei das wässrige Elektrolyt-Slurry (30) ferner mindestens ein Elektrolytsalz mit redoxinaktiven Anionen umfasst, oder ferner eine Mischung aus mindestens zwei oder mehr Elektrolytsalzen mit sowohl redoxaktiven als auch redoxinaktiven Anionen umfasst.

7. Stromspeichervorrichtung (1) nach einem der Ansprüche 1 bis 6, wobei die aktivierten porösen Kohlenstoffpartikel (31) in dem wässrigen Elektrolyt-Slurry (30) aus nanoporösen Kohlenstoffmaterialien bestehen, die eine spezifische Oberfläche im Bereich von 50 m²/g bis 3.500 m²/g, bevorzugt im Bereich von 200 m²/g bis 3.000 m²/g, und besonders bevorzugt von 2.000 m²/g, aufweisen.

8. Stromspeichervorrichtung (1) nach einem der Ansprüche 1 bis 7, wobei die Viskosität des wässrigen Elektrolyt-Slurrys (30) im Bereich von 100 mPas bis 20.000 mPas, bevorzugt im Bereich von 200 mPas bis 10.000 mPas, und besonders bevorzugt bei 1.000 mPas, liegt.

9. Stromspeichervorrichtung (1) nach einem der Ansprüche 1 bis 8, wobei das wässrige Elektrolyt-Slurry (30) ferner Industrieruß umfasst, wobei das Gewichtsverhältnis von Industrieruß zu aktiviertem Kohlenstoff im Bereich von 1:1 bis 1:10, bevorzugt im Bereich von 1:5 bis 1:10, und besonders bevorzugt bei 1:9, liegt.

10. Stromspeichervorrichtung (1) nach einem der Ansprüche 1 bis 9, wobei das Verhältnis des Gesamt-Kohlenstoffmaterials in dem wässrigen Elektrolyt-Slurry (30) im Bereich von 1:1 bis 1:10 liegt und bevorzugt 1:5 beträgt.

11. Stromspeichervorrichtung (1) nach einem der Ansprüche 1 bis 10, wobei die poröse Separatormembran (8) aus Fasermaterial besteht, vorzugsweise aus einem Fasermaterial enthaltend oder bestehend aus Glasfasern.

12. Verfahren zum Erzeugen, Speichern und vorzugsweise Rückgewinnen von Energie, wobei das Verfahren die folgenden Schritte umfasst:
- a- Bereitstellen einer Stromspeichervorrichtung (1) nach einem der Ansprüche 1 bis 11;
- b- Bereitstellen eines wässrigen Elektrolyt-Slurrys (30) in einem ungeladenen Zustand, das aktivierte poröse Kohlenstoffpartikel (31) und mindestens ein Elektrolytsalz mit redoxaktivem Iodidsalz in einem Zulaufbehälter (2) der genannten Stromspeichervorrichtung (1) umfasst;
- c- intensives Rühren (3) des genannten wässrigen Elektrolyt-Slurrys (30) in dem Zulaufbehälter (2);
- d- Pumpen (15,16) des genannten wässrigen Elektrolyt-Slurrys (30) in eine erste Halbzelle (6) und parallel in eine zweite Halbzelle (7), die von der ersten Zelle (6) durch eine poröse Separatormembran (8) getrennt ist;
- e- elektrisch leitendes Verbinden eines ersten positiven Stromabnehmers (9) der ersten Halbzelle (6) mit einem positiven Pol einer Gleichspannung einer Stromversorgung (17) und eines zweiten negativen Stromabnehmers (11) der zweiten Halbzelle (7) mit einem negativen Pol der Gleichspannung der Stromversorgung (17);
- f- Herstellen eines geladenen Zustands des wässrigen Elektrolyt-Slurrys (30) in der ersten Halbzelle (6) und Bilden einer ersten negativen Slurry-Elektrode (10) mit geladenen negativen Elektrodenpartikeln (32), die Iod (34) umfassen, wodurch die genannte erste negative Slurry-Elektrode (10) Iod (34) aufweist, das an einer Kohlenstoff/Iod-Grenzfläche an den porösen Kohlenstoffpartikeln (31) gesammelt ist; und
- g- Herstellen eines geladenen Zustands des wässrigen Elektrolyt-Slurrys (30) in der zweiten Halbzelle (7) und Bilden einer zweiten positiven Slurry-Elektrode (12) mit geladenen positiven Elektrodenpartikeln (33), wodurch die genannte zweite negative Slurry-Elektrode (12) Kationen-Ladungen (37) aufweist, die an einer elektrischen Doppelschicht in den porösen Kohlenstoffpartikeln (31) gespeichert sind.

13. Verfahren nach Anspruch 12, wobei zusätzlich zu den Schritten -a- bis -g- ein weiterer Schritt -h- erfolgt, wobei im Schritt -h- die genannte erste negative Slurry-Elektrode (10) in einen ersten Speicherbehälter für Slurry im geladenen Zustand (21) gepumpt (15;25) wird, und die genannte zweite positive Slurry-Elektrode (12) in einen zweiten Speicherbehälter für Slurry im geladenen Zustand (22) gepumpt (16;26) wird.

14. Verfahren nach einem der Ansprüche 12 oder 13, wobei mindestens die Schritte -d-bis -g-, vorzugsweise mindestens die Schritte -d- bis -h-, simultan durchgeführt werden.

15. Verfahren nach einem der Ansprüche 12 bis 14, wobei zur Energierückgewinnung und Bereitstellung der gespeicherten Ladung an einen Verbraucher (40) die geladenen Slurry-Elektroden (10,12) von den jeweiligen Halbzellen (6,7) oder Speicherbehältern für Slurry im geladenen Zustand (21,22) in den Zulaufbehälter (2) derselben Stromspeichervorrichtung (1) oder in einen weiteren Zulaufbehälter (102) einer mit der Stromspeichervorricthung verbundenen weiteren Stromspeichervorrichtung (100) befördert werden, wodurch die negativen Elektrodenpartikel (32) der ersten negativen Slurry-Elektrode (10) und die positiven Elektrodenpartikel (33) der zweiten positiven Slurry-Elektrode (12) jeweils mittels Stromabnehmern (9,11; 109,111) entladen werden, die elektrisch leitend mit den Halbzellen (6,7; 106,107) der Stromspeichervorrichtung (1) oder der weiteren Stromspeichervorrichtung (100) gekoppelt sind, und wobei der Verbraucher (40) elektrisch leitend mit den Stromabnehmern (9,11; 109,111) verbunden wird.

## Revendications

1. Dispositif de stockage d'énergie par écoulement (1), comprenant :
- un récipient d'alimentation (2) contenant une suspension d'électrolyte aqueuse non chargée (30) ;
- une cellule d'écoulement de condensateur (5) présentant une première demi-cellule (6), une seconde demi-cellule (7) et une membrane séparatrice poreuse (8) interposée entre la première demi-cellule (6) et la seconde demi-cellule (7), dans lequel les première (6) et seconde (7) demi-cellules sont chacune raccordées au récipient d'alimentation (2) par l'intermédiaire d'un tuyau d'alimentation séparé (13, 14), qui est chacun équipé d'une pompe d'alimentation (15,16), et sont chacune alimentées par la même suspension d'électrolyte (30), dans lequel
- la première demi-cellule (6) est configurée pour être couplée de manière électriquement conductrice avec un premier collecteur de courant positif (9) qui est connecté électriquement (18) à un pôle positif d'une tension CC d'une alimentation électrique (17), et
- la seconde demi-cellule (7) est configurée pour être couplée de manière électriquement conductrice avec un second collecteur de courant négatif (11) qui est connecté électriquement (19) à un pôle négatif de la tension CC de l'alimentation électrique (17) ;
- dans lequel ladite suspension d'électrolyte aqueuse (30) comprend des particules de carbone poreuses activées (31) et au moins un sel d'électrolyte comprenant un sel d'iodure à activité redox ;
- moyennant quoi dans un état chargé dans la première demi-cellule (6), une première électrode de suspension négative (10) avec des particules d'électrode négative chargées (32) comprenant de l'iode (34) est formée, au sein de laquelle de l'iode (34) est rassemblé au niveau d'une interface carbone/iode au niveau des particules de carbone poreuses (31), et dans la seconde demi-cellule (7), une seconde électrode de suspension positive (12) avec des particules d'électrode positive chargées (33) est formée, dans laquelle des charges de cation (37) sont stockées sur une double couche électrique au sein des particules de carbone poreuses (31).

2. Dispositif de stockage d'énergie par écoulement (1) selon la revendication 1, dans lequel comme observé dans le sens aval (23, 24) de la cellule d'écoulement (5), un premier récipient de stockage de suspension chargée(21) et, séparé de celui-ci, un second récipient de stockage de suspension chargée (22) sont agencés, dans lequel le premier récipient de stockage de suspension chargée (21) est configuré pour stocker la première électrode de suspension négative (10) avec des particules d'électrode négative chargées (32) et est raccordé à la première demi-cellule (6) par l'intermédiaire d'un tuyau de suspension (23), et dans lequel le second récipient de stockage de suspension chargée (22) est configuré pour stocker la seconde électrode de suspension positive (12) avec des particules d'électrode positive chargées (33) et est raccordé à la seconde demi-cellule (7) par l'intermédiaire d'un tuyau de suspension (24), dans lequel les tuyaux de suspension (23,24) sont de préférence chacun équipé d'une pompe de suspension auxiliaire (25,26).

3. Dispositif de stockage d'énergie par écoulement (1) selon l'une des revendications 1 ou 2, dans lequel
pour la récupération d'énergie et la fourniture de la charge stockée à un consommateur (40), les électrodes de suspension chargées (10,12) peuvent être convoyées depuis les demi-cellules (6,7) respectives ou les récipients de stockage de suspension chargée (21,22) respectifs dans le récipient d'alimentation (2) du même dispositif de stockage d'énergie par écoulement (1) ou dans un autre récipient d'alimentation (102) d'un autre dispositif de stockage d'énergie par écoulement (100) raccordé à celui-ci, moyennant quoi les particules d'électrode négative (32) de la première électrode de suspension négative (10) et les particules d'électrode positive (33) de la seconde électrode de suspension positive (12) peuvent chacune être déchargées au moyen de collecteurs de courant (9,11 ; 109,111) couplés de manière électriquement conductrice aux demi-cellules (6,7 ; 106,107) du dispositif de stockage d'énergie par écoulement (1) ou de l'autre dispositif de stockage d'énergie par écoulement (100), et dans lequel le consommateur (40) est connecté de manière électriquement conductrice aux collecteurs de courant (9,11 ; 109,111).

4. Dispositif de stockage d'énergie par écoulement (1) selon l'une quelconque des revendications 1 à 3, dans lequel
la concentration de l'au moins un sel d'électrolyte comprenant un sel d'iodure à activité redox dans la suspension d'électrolyte aqueuse (30) est dans la plage de 0,01 mol/L à 10 mol/L, de préférence dans la plage de 0,1 mol/L à 5 mol/L, et particulièrement préférentiellement de 2,0 mol/L.

5. Dispositif de stockage d'énergie par écoulement (1) selon l'une quelconque des revendications 1 à 4, dans lequel
l'au moins un sel d'électrolyte est un sel d'iodure de sodium.

6. Dispositif de stockage d'énergie par écoulement (1) selon l'une quelconque des revendications 1 à 5, dans lequel
la suspension d'électrolyte aqueuse (30) comprend en outre au moins un sel d'électrolyte avec des anions sans activité redox, ou comprend en outre un mélange d'au moins deux sels d'électrolyte ou plus avec à la fois des anions à activité redox et sans activité redox.

7. Dispositif de stockage d'énergie par écoulement (1) selon l'une quelconque des revendications 1 à 6, dans lequel
les particules de carbone poreuses activées (31) dans la suspension d'électrolyte aqueuse (30) sont fabriquées en matériaux de carbone nanoporeux ayant une surface spécifique dans la plage de 50 m²/g à 3500 m²/g, de préférence dans la plage de 200 m²/g à 3000 m²/g, et particulièrement préférentiellement de 2000 m²/g.

8. Dispositif de stockage d'énergie par écoulement (1) selon l'une quelconque des revendications 1 à 7, dans lequel
la viscosité de la suspension d'électrolyte aqueuse (30) est dans la plage de 100 mPas à 20 000 mPas, de préférence dans la plage de 200 mPas à 10 000 mPas, et particulièrement préférentiellement de 1000 mPas.

9. Dispositif de stockage d'énergie par écoulement (1) selon l'une quelconque des revendications 1 à 8, dans lequel
la suspension d'électrolyte aqueuse (30) comprend en outre du noir de carbone, dans lequel le rapport pondéral du noir de carbone au carbone activé est dans la plage de 1:1 à 1:10, de préférence est dans la plage de 1:5 à 1:10, et particulièrement préférentiellement est de 1:9.

10. Dispositif de stockage d'énergie par écoulement (1) selon l'une quelconque des revendications 1 à 9, dans lequel
le rapport du matériau carboné total pourvu dans la suspension d'électrolyte aqueuse (30) est dans la plage de 1:1 à 1:10, de préférence est de 1:5.

11. Dispositif de stockage d'énergie par écoulement (1) selon l'une quelconque des revendications 1 à 10, dans lequel
la membrane séparatrice poreuse (8) est fabriquée en un matériau fibreux, de préférence fabriquée en un matériau fibreux contenant ou constitué de fibres de verre.

12. Procédé de génération, de stockage et de préférence de récupération d'énergie, ledit procédé comprenant les étapes suivantes :
- a- fournir un dispositif de stockage d'énergie par écoulement (1) selon l'une quelconque des revendications 1 à 11 ;
- b- fournir une suspension d'électrolyte aqueuse non chargée (30) comprenant des particules de carbone poreuses activées (31) et au moins un sel d'électrolyte comprenant un sel d'iodure à activité redox dans un récipient d'alimentation (2) dudit dispositif de stockage d'énergie par écoulement (1) ;
- c- remuer (3) de manière intense ladite suspension d'électrolyte aqueuse (30) dans le récipient d'alimentation (2) ;
- d- pomper (15, 16) ladite suspension d'électrolyte aqueuse (30) à la fois dans une première demi-cellule (6) et, en parallèle, dans une seconde demi-cellule (7) séparée de la première cellule (6) par une membrane séparatrice poreuse (8) ;
- e- connecter de manière électriquement conductrice un premier collecteur de courant positif (9) de la première demi-cellule (6) avec un pôle positif d'une tension CC d'une alimentation électrique (17) et un second collecteur de courant négatif (11) de la seconde demi-cellule (7) avec un pôle négatif de la tension CC de l'alimentation électrique (17) ;
- f- établir un état chargé de la suspension d'électrolyte aqueuse (30) dans la première demi-cellule (6) et former une première électrode de suspension négative (10) avec des particules d'électrode négative chargées (32) comprenant de l'iode (34), moyennant quoi ladite première électrode de suspension négative (10) présente de l'iode (34) rassemblé au niveau d'une interface carbone/iode au niveau des particules de carbone poreuses(31) ; et
- g- établir un état chargé de la suspension d'électrolyte aqueuse (30) dans la seconde demi-cellule (7) et former une seconde électrode de suspension positive (12) avec des particules d'électrode positive chargées (33), moyennant quoi ladite seconde électrode de suspension négative (12) présente des charges de cation (37) stockées au niveau d'une double couche électrique au sein des particules de carbone poreuses (31).

13. Procédé selon la revendication 12, dans lequel
en plus des étapes -a- à -g-, une étape supplémentaire -h- est mise en œuvre, dans laquelle étape -h- ladite première électrode de suspension négative (10) est pompée (15 ; 25) jusqu'à un premier récipient de stockage de suspension chargée (21) et ladite seconde électrode de suspension positive (12) est pompée (16 ; 26) jusqu'à un second récipient de stockage de suspension chargée (22).

14. Procédé selon l'une des revendications 12 ou 13, dans lequel
au moins les étapes -d- à -g-, de préférence au moins les étapes -d- à -h-, sont mises en œuvre simultanément.

15. Procédé selon l'une quelconque des revendications 12 à 14, dans lequel
pour la récupération d'énergie et la fourniture de la charge stockée à un consommateur (40), les électrodes de suspension chargées (10,12) sont convoyées depuis les demi-cellules (6,7) respectives ou les récipients de stockage de suspension chargée (21,22) respectifs dans le récipient d'alimentation (2) du même dispositif de stockage d'énergie par écoulement (1) ou dans un autre récipient d'alimentation (102) d'un autre dispositif de stockage d'énergie par écoulement (100) raccordé à celui-ci, moyennant quoi les particules d'électrode négative (32) de la première électrode de suspension négative (10) et les particules d'électrode positive (33) de la seconde électrode de suspension positive (12) sont chacune déchargées au moyen de collecteurs de courant (9,11 ; 109,111) couplés de manière électriquement conductrice aux demi-cellules (6,7 ; 106,107) du dispositif de stockage d'énergie par écoulement (1) ou de l'autre dispositif de stockage d'énergie par écoulement (100), et dans lequel le consommateur (40) est connecté de manière électriquement conductrice aux collecteurs de courant (9,11 ; 109,111).
